# EUROPEAN PATENT APPLICATION

(11) **EP 4 635 603 A1**
(43) Date of publication of application: **22.10.2025**
(21) Application number: 25168747.1
(22) Date of filing: 07.04.2025
(51) Int. Cl.: B01D 53/04, C23G 5/04, D06F 43/00

(54) **METAL WASHING MACHINE WITH A DEVICE TO MINIMIZE EMISSIONS UP TO THEIR ELIMINATION**

(30) Priority: 19.04.2024 IT 202400008992
(71) Applicant: Hemolife Srl, 42041 Brescello (RE) (IT)
(72) Inventor: SAMA, Claudio, 42041 Brescello (IT)
(74) Representative: Rocchetto, Elena

(57) **Abstract**

This patent concerns an industrial washing machine for various articles, which includes a device capable of completely eliminating solvent emissions into the atmosphere, storing the gaseous phase after condensation at low temperature, in a flexible expandable bag.

This patent also concerns the operating method of the washing machine.

## Description

This patent is related to solvent washing systems for industrial articles, hereinafter called industrial washing machines or metal cleaning machines and in particular concerns a device that significantly reduces solvent emissions into the atmosphere which, for a better understanding of its usefulness, is accompanied by the diagram of a washing machine in which it is inserted and the description of the washing process that includes this device.

### 1. State of the art of industrial solvent cleaning systems of the single chamber and vacuum type.

Single chamber solvent metal cleaning machines based on vacuum are made up of various tanks all connected together, whose outlets to the outside are all collected in a single duct, called a chimney, through which the movements of air and solvent vapors towards the external environment take place.

The air that enters or exits the machine during the washing process is one of the major sources of emissions, since once it has come into contact with the solvent in liquid or vapor phase, every time it exits the chimney it carries with it a certain quantity of solvent.

The air is expelled from the washing machine in various circumstances which are listed below.

### 1.1 Heating of the machine in preparation for washing.

Each washing machine is equipped with a distiller whose function is to regenerate the solvent by boiling and subsequent condensation on the cold surface of chilled water condensers or those powered by refrigeration units, when a temperature below 0°C is required.

Almost all washing machines are also equipped with a vacuum distiller that allows the solvent to evaporate almost completely from the residues of oil and various dirt removed during the washing of the parts.

Both types of distillers at the beginning of the working session after a period of inactivity, are at room temperature and, unless they have remained under vacuum for the entire period of inactivity, contain solvent in liquid phase in the lower part and air with solvent vapours in the space above the free surface.

The solvent is also contained in other tanks of the machine from which it is taken during washing and is present in filtration systems and water and solvent separators where these are necessary.

In the preparation phase of the machine to enable it to start washing, the solvent is started to be heated in the distillers and, if necessary, also in the accumulation tanks. As part of the solvent heats up it goes into the vapor phase, mixing with the air above it until all the air is expelled beyond the condensers where the solvent returns to the liquid state and goes to feed the accumulation tanks.

Therefore, in this stage of preparation of the machine, the air contained in the spaces above the free surface of the solvent contained in the tanks up to the condensers is forced to be expelled from the machine. This air contains a certain quantity of solvent in the gaseous phase, an amount that depends on the volatility of the solvent and the temperature of the coldest walls that the air encounters before being expelled.

When touching a cold wall, solvent vapors can condense, that is, turn to a liquid state if the air temperature is lower than the dew point of the solvent itself. If the residence time of the air is long enough so that the solvent can condense as much as possible on the cold wall of the condenser, the air comes out with a solvent concentration that depends exclusively on the temperature of the condenser wall, as predicted by the laws of physical chemistry.

### 1.2 Air entering the washing machine due to the washing process

In any single-chamber washing machine, regardless of the solvent, once the material to be washed has been loaded and the door closed, the solvent is introduced.

If the air is not evacuated by means of a vacuum pump before introducing the solvent, as the solvent gradually occupies part of the chamber, it moves part of the residual air towards the outside of the washing chamber, which is then channeled towards the chimney to be treated. If the solvent introduced into the chamber is close to its boiling point, the vapours almost completely take the place of the air.

In the case of high boiling point solvents that have a vapor pressure of around 1 millibar at room temperature, it is possible to avoid removing the air with a vacuum pump before introducing the solvent, since the treatment of the air that is emitted at the chimney is facilitated by the low volatility and it is not necessary to use very low temperature cryostats.

In the case of volatile solvents, which are more difficult to handle, it is almost mandatory to remove the air with a vacuum pump before introducing the solvent. Even in this case, it is sometimes expensive to completely remove the air from the washing chamber and one is satisfied with reaching an absolute pressure of a few millibars or a few tens of millibars. This means that a small quantity of air still remains in the chamber and mixes with the solvent vapors. In the final drying, the vacuum completely removes the gaseous phase from the washing chamber and therefore also any air not evacuated before the solvent is introduced. The solvent is recovered by condensation, but the air, which is non-condensable, is forced to exit from the chimney and therefore must be treated properly.

### 1.3 Accidental solvent emissions.

In daily practice there are random emissions, sometimes of significant size.

In particular, this occurs especially with low-boiling-point solvents that evaporate very easily at room temperature. Vacuum-based washing machines must be perfectly sealed, but since they are equipped with an access door to the washing chamber, inspection doors, filters, valves, sensors and measuring instruments, it can quite easily happen that over time they do not maintain a perfect vacuum seal. This creates small, apparently invisible loss of solvent to the outside that can reach significant emissions. For example, if at some point in the machine, in presence of a damaged gasket, there is a small leakage of a volatile solvent in the liquid phase, this is not noticed as no drop is formed, because as soon as it comes out, the solvent evaporates immediately unless the leak is significant enough to form a drop.

The door of the washing chamber is opened at each cycle of loading and unloading material and the relative gasket can deteriorate especially if it comes into contact with metal chips, very often present in the materials to be washed.

The damage, i.e. the loss of solvent, is noticed only later based on the control of the levels in the various tanks of the machine. These losses due to lack of vacuum sealing can be reduced or eliminated by keeping all the parts of the washing machine that contain solvent in liquid or vapor phase under negative pressure. In this case, in the presence of a lack of integrity, the machine sucks air from the outside, preventing the solvent from escaping. In this case, the air that has entered the machine must be expelled by the same means that put the machine under negative pressure and therefore the air that has come into contact with the solvent must be adequately treated to reduce emissions.

### 2. State of the art to prevent or eliminate solvent emissions in single-chamber vacuum-based washing machines.

The most commonly used systems to contain emissions due to air that has come into contact with the solvent are cold, i.e. low-temperature condensers where an attempt is made to recover the majority of solvent vapors, and activated carbon systems with or without regeneration on board the machine. However, cold emission reduction systems are not able to completely eliminate emissions and if you want zero solvent emissions at the chimney, it is necessary to use activated carbons or equivalent absorption media.

The treatment of air polluted by solvents such as modified alcohols or hydrocarbons having a relatively high boiling point for example in the range 150 - 180°C is quite easy with the cold, i.e. through low-temperature condensers. However, there are solvents with a low boiling point such as those based on mixtures of trans-dichloroethylene that boils near 48°C, or in very particular cases solvents such as methylene chloride that boils at 40°C or even other solvents used
for special applications that boil even at less than 20°C. For these solvents, the application of cold is never as effective as in the case of modified alcohols. For these volatile solvents it is therefore necessary to introduce devices and precautions capable of minimizing the need for the application of cold and activated carbon absorption systems that perform their function best especially if the amount of air that comes into contact with the solvent is limited as much as possible because separating the solvent from the air is always a difficult task.

### 3. Innovative device to minimize the air to be treated

The reduction of the start-up emissions of the washing machine in the heating phase, those due to washing and those random, is possible with the described device below.

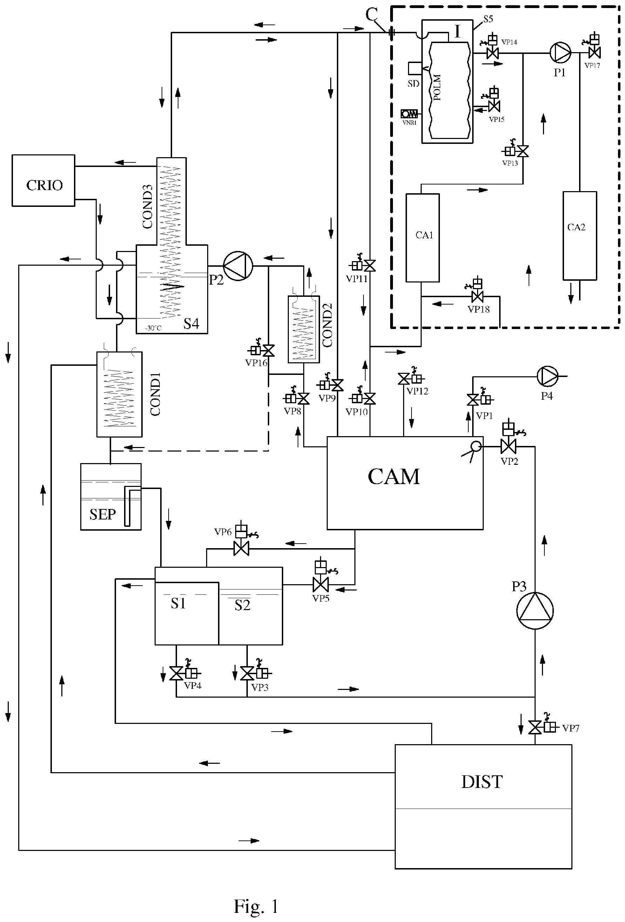

Figure 1 shows the hydraulic and instrumental diagram of a typical single-chamber solvent washing machine based on vacuum technology.

The innovative part of the machine is represented by the device consisting of the tank drawn in the upper right part of the diagram, enclosed by a rectangle with dotted lines, consisting of a rigid S5 tank, which inside contains a variable volume bag POLM of smaller dimensions or at most equal to those of the rigid S5 tank.

The volume between the POLM bag and the rigid tank S5 is hereinafter called cavity I.

This POLM bag, consisting for example of a bag of waterproof, flexible and expandable solvent-resistant material, is connected to the machine chimney C, i.e. to the point where all the components containing solvent in the liquid and vapour phase are connected. Therefore, each washing phase that involves a change in the volume of the gaseous phase inside it or any other cause that involves air entering the washing machine determines a change in the volume of the POLM bag. For example, during the machine heating phase, the air that is normally emitted by the DIST distiller can be stored by the POLM bag. When the machine cools down, the vapor pressure of the solvent contained inside the machine is reduced as well as the volume of the air and therefore part of the gaseous air-solvent mixture contained in the POLM bag returns to the machine and therefore if the volume of the POLM bag is adequate, all emissions due to the start and shutdown of the washing machine are eliminated. When the POLM bag is not at its maximum volume, it behaves therefore like a partially deflated air chamber.

Therefore, if air enters during the heating phase, for example, as it is expelled from the DIST distiller, the POLM bag expands and its walls, not offering any mechanical resistance since they are flexible, transmit the internal pressure of the

POLM bag to the interspace I. Therefore, at any moment, the inside of the POLM bag which contains air with solvent vapours and the interspace I are always at the same pressure, even if there is a physical separation that prevents the air and any solvent vapours contained in it from mixing with the external air present in the cavity I.

If the pressure in the cavity I is maintained at a value other than the atmospheric one, for example slightly negative by means of a classic oil vacuum pump, or a dry one or a compressed air or liquid jet ejector or any equivalent means, the inside of the POLM bag is also at negative pressure. This negative pressure is transmitted from the chimney to the entire hydraulic circuit of the machine and therefore the entire machine is at the pressure set in the cavity I. In addition to dampening the change in volume of the internal gaseous phase of the washing machine that occurs during heating and cooling of the machine, the device performs an important function of controlling the integrity of the machine itself. If the pressure maintained in the intespace I is negative, in the event of a small lack of integrity at some point of the washing machine, the air is sucked into it and prevents the solvent from escaping. A counter of the quantity of air entering the machine following the lack of integrity can therefore activate an alarm that draws the attention of the operators. In some countries, the regulations regarding chlorinated solvents suggest keeping the entire machine under negative pressure with respect to the environment. Distance sensors indicated in fig.1 as SD or other devices with the same function, such as photoelectric cells, inductive or capacitive sensors, allow to measure the volume variations of the POLM bag and possibly to generate an alarm.

In figure 1 the means to create the depression in the rigid tank S5 is indicated as a vacuum pump P1 that can perform two functions. The first is to suck air from the interspace I between the POLM bag and its rigid tank S5 to compensate for any entry of air and solvent vapors inside the POLM bag itself.

The second is to reduce the volume of the POLM bag, by sucking the mixture of air and vapors from inside it through the valve VP11, passing them through a CA1 activated carbon cartridge, or other solvent absorption medium, followed by a valve VP13 and to emit treated air outside if the POLM bag for some reason has expanded beyond the maximum expected volume.

In conclusion, the pump P1 indicated in figure 1 together with the valves VP14 and VP15 allows the pressure in the space between the POLM bag and the rigid tank S5 to be maintained in the desired range.

When using solvents where, as a precaution, it is advisable to keep all components containing the solvent under negative pressure, the depression must be greater than the highest solvent column inside the machine. For example, in the case of tanks containing a solvent with a density of 1.3 kg/litre, where the difference in height between the highest point of the free surface and the lowest point is, for example, 100 cm, the depression must be at least 130 millibar (100 x 1.3).

In this case, any lack of integrity of the machine leads to the suction of air inside it and therefore the entry of air into the POLM bag. The pipes subject to pressure greater than atmospheric pressure are generally reduced in number in any washing machine and above all they are at high pressure only for a small fraction of time compared to the duration of a normal washing cycle.

Maintenance of depression and therefore control of losses can be maintained 24 hours a day.

The depression at which the machine can work can also be quite high and this allows to considerably reduce the boiling point of the solvent used in the washing, sometimes with significant advantages regarding the washing temperature, reducing the risk of decomposition of the solvent.

For solvents with a very low boiling point, it may be interesting to keep the working pressure higher than atmospheric pressure to increase the washing temperature. This case is rare, but the system described above allows to maintain a pressure in the washing machine at the value that the operator considers appropriate, both positive and negative.

In simple terms, the device object of this invention can create a pressure inside the POLM bag that is transmitted to the inside of the machine, different from the external environment, as if it were installed at high altitude in the case of negative pressure, or as if it were inside a pressurized chamber in the opposite case.

All this by acting on the pressure of the interspace I, therefore working in an environment with pure air, physically separated from the air inside the variable volume bag POLM, air that contains solvent vapors.

In the hydraulic diagram shown in fig. 1, it was assumed to exercise control of the pressure inside the expandable bag POLM by acting through the pump P1 which, to depressurize the POLM bag, sucks air from interspace I.

However, you can do exactly the opposite, that is, connect the chimney to the space between the rigid tank S5 and the expandable POLM bag. In this case, the pump P1 sucks air from the POLM bag which, by contracting, lowers the pressure outside it and transmits the depression to the interspace I and from there through the chimney to the entire hydraulic circuit of the washing machine.

The management of the POLM bag pressure is entrusted to a pressure sensor that measures the pressure inside the POLM bag and the machine management program decides how to react. For example, if you want to keep the POLM bag in negative pressure, for a pressure variation of just 1 millibar, no action is started to restore the pressure, but when it reaches a few millibar, a little air is removed from the interspace I using pump P1 to restore the design depression of the machine. If the variable volume POLM is constituted by the interspace I, the pressure sensor will act on the pressure variation inside it.

If air continues to enter, the POLM bag increases its volume up to a preset maximum level which causes the machine to react in another way, that is, by sucking air from inside the POLM bag via pump P1. This air, even if it has been treated by a low temperature condenser COND3 before being stored in the POLM bag, needs to be treated with activated carbon or other absorption media and is extracted by pump P1 via valve VP11, the activated carbon cartridge CA1 and valve VP13. Pump P1 which removes the air from the interspace I or from inside the POLM bag has, like all pumps, a nominal flow rate and therefore each intervention is stored in the memory of the washing machine and it is therefore able to know how much air has entered the POLM bag. This device also takes into account the amount of air remaining in the washing chamber if for some reason this air has not been completely extracted from the washing chamber before the solvent is added.

The device described above therefore completely eliminates emissions due to heating during the start-up phase of the
machine, constitutes a very valid system for identifying random solvent leaks due to lack of sealing and allows
the control and precise measurement of the quantity of air introduced into the machine, air that if it enters the washing chamber, is inexorably expelled during the final drying of the washed pieces and if it enters due to lack of sealing to the depression in other parts sooner or later it must also be expelled from the chimney. To better describe the importance of this device inserted in a single-chamber vacuum solvent washing machine, a typical metal washing machine and a typical washing cycle are described.

### 4. Description of a typical single-chamber solvent-based washing machine based on vacuum

Fig. 1 shows the hydraulic and functional diagram of said washing machine and the washing, drying and emission control phases are described. There may be several variations of this diagram, but here we wish to describe the function of the device which is the object of this patent, which indicates a washing machine with only the fundamental components. The machine is therefore composed of a vacuum-tight washing chamber CAM, a DIST distiller where the solvent is regenerated by evaporation, a COND1 condenser that condenses the vapors produced by the distiller DIST, a water and solvent separator SEP, an accumulation system consisting of two tanks S1 and S2 (but there can also be a greater number), a washing pump P3, a drying pump (or a set of cascade vacuum pumps) P2 preceded by a low temperature condenser COND2, a vacuum pump P4, a low or very low temperature condenser COND 3 that cools the tank S4 fed by a CRIO refrigerator or cryostat, an activated carbon cartridge CA1 and a second carbon cartridge CA2.

Finally the machine is composed even of said POLM bag for collecting the air and solvent mixture, said POLM bag inserted in said rigid vacuum-tight tank S5 and a vacuum pump P1 that manages the internal pressure of all the components of the machine where solvent is contained in liquid phase or vapor phase.

All these components are connected to each other with valves generally indicated with the acronym VP followed by a progressive number and managed by typical instruments of washing machines such as pressure gauges, vacuum gauges, thermometers, solenoid valves, safety and non-return valves etc., here indicated only in part as they are not strictly necessary for understanding the function of the POLM bag. All the parts of the machine are connected to each other and converge in said duct or chimney C connected to the POLM bag, inserted in said rigid vacuum-tight tank S5, in turn connected to the outside with said vacuum pump P1 and with a valve VP14.

The function of the POLM bag, as already described, is to dampen or level the internal pressure of all the components of the machine and to emit air outside that has been treated with very low temperature coolers and passed through active carbon cartridges or other absorption media. Depending on the type of solvent, vacuum drying at the end of washing can be carried out with condensation and recovery of the solvent inserted between the chamber and a second vacuum pump P2, or after said second vacuum pump P2. In the case of solvents with a high boiling point, some manufacturers insert the condenser COND2 between the CAM washing chamber and said second pump P2 because, since the vapor pressure of the solvent is close to zero, said vacuum pump P2 sucks in only a small amount of vapors and therefore the recovery of the evaporated solvent in the chamber is practically almost entirely carried out by the condenser COND2. This is not possible for very volatile solvents because to have a vapor pressure close to zero it would be necessary to have a condenser with a very low working temperature, with high cost and management, so in this case we choose to condense the vapors using a COND3 condenser downstream of the vacuum pump P2 where a very low temperature is not necessary.

In this case, the second vacuum pump P2 to condense the vapours at its outlet must be able to suck up the solvent vapours and, for example, it can be a screw pump, or a set of a liquid ring pump in series with a dry pump such as a roots pump or another type of dry pump. It can also be a membrane pump with one or more stages. The arrangement of the drying pump with condenser COND3 downstream of the pump is valid for any type of solvent, while the arrangement with condenser COND2 between the CAM washing chamber and the P2 pump is valid preferably only for solvents with a high boiling point.

In the description of a typical washing machine in fig. 1, condensers are indicated both before the second pump P2 (COND2) and after the pump (COND3) which therefore cover all possible configurations.

In the case where the solvent is recovered during the drying phase via the condenser COND2, i.e. between the CAM washing chamber and the second vacuum pump P2, this is connected with the dotted line to the water and solvent separator SEP. To better understand the function of the POLM bag, the sequence of a typical vacuum washing and drying cycle is described, using a low boiling point solvent such as methylene chloride, notoriously not easy to handle.

### 4.1. Preparatory phase of the machine before starting the washing of the material.

It is assumed that the machine has been inactive for many hours so that all its components and the solvent contained in them are at room temperature. The switching on of the machine starts a washing preparation phase that consists of the following operations:

### 4.2. Switching on the CRIO cooler that supplies the COND3 condenser.

This CRIO cooler, consisting of a refrigeration unit, should preferably never be deactivated, except when defrosting is necessary. If it has been switched off and is at room temperature, the air inside the COND3 condenser could have a very high solvent concentration due to its high volatility. Therefore, the switching on of the CRIO cooler or cryostat must precede any other operation.

A single-stage common refrigeration unit can have an expansion temperature of - 40°C so that the air passing through a condenser fed by a refrigerant fluid at -40°C can exit at a temperature no higher than -30°C. At this temperature the air saturated with methylene chloride vapors has a concentration of about 140 grams per cubic meter.

In the case of a two-stage refrigeration unit with a second stage expansion temperature of around -90°C, the air exiting the COND3 condenser could have a methylene chloride concentration of less than 20 grams per cubic meter. When the CRIO refrigeration unit is turned on, the temperature inside the COND3 condenser begins to drop and when it reaches a temperature of - 30°C you can proceed to the next phase.

### 4.3. Reaching the desired pressure in the POLM bag

If the machine has been at room temperature for several hours at values close to or equal to the minimum temperature in the environment in which it is installed, the volume of air and vapors contained inside it is at a minimum. In these conditions, the volume of the POLM bag is also at a minimum. For safety reasons, it is convenient that the POLM bag still has a certain capacity to reduce its volume, because in subsequent washing phases, it could contract. The POLM bag, being equipped with one or more sensors that measure its volume, consisting for example of photoelectric cells, SD distance sensors based on ultrasonic or laser systems, can be brought back to the desired value before the washing machine is turned on by sucking air from inside it using the vacuum pump P1 and the valves VP11 and VP13. This reduction in volume must be carried out when the condenser COND3 is already at the minimum temperature obtainable by the CRIO cooler or cryostat. In this way the air that passes through a first CA1 carbon cartridge and subsequently also a second CA2 carbon cartridge must treat a gaseous mixture with a minimum concentration of solvent, which in the case of methylene chloride is around 140 grams per cubic meter and therefore the activated carbon, if it is not saturated, completely absorbs the traces of solvent in this air which then comes out pure from the machine. By sucking air from the POLM bag, the pressure in the interspace I drops and a vacuum switch or pressure switch opens a VP15 valve so as to let air in from the outside. Alternatively, air can be allowed to enter the interspace I via a check valve VNR1 with adjustable opening force. Once the desired volume of the POLM bag has been reached, the reduction process stops.

At this point, a phase of creating a certain depression inside the machine can begin. The depression is desirable in the case of solvents with a low boiling point, such as methylene chloride. This phase is carried out via said vacuum pump P1 which sucks air from the interspace I via said valve VP14 and the POLM bag automatically expands, transmitting the depression to all the components of the machine connected to it.

The air mixed with vapors enters the POLM bag after having passed through the condenser COND3 where it loses a good part of the solvent vapors. A depression of 50 - 100 mbar throughout the machine is sufficient in many cases to ensure that in the event of a defective gasket the solvent does not escape from the machine itself.

Once the desired pressure and temperature have been reached inside the machine and in the condenser COND3, the DIST distiller can be turned on.

### 4.4. Turning on the distiller

The DIST distiller is used to regenerate the solvent which is evaporated through heating and subsequent condensation in a condenser COND1 generally supplied with chilled water supplied by a refrigerator external to the machine or even internal, but not indicated here as it is not important to understand the washing cycle.

The DIST distiller is a generally vacuum-tight vessel that contains solvent in the lower part with a gaseous phase above the free surface consisting mainly of air, but in the case of volatile solvents also with a fair presence of vapors. In the case of methylene chloride for example, the concentration of this solvent above the free surface at room temperature could even be higher than one kilogram per cubic meter.

When the DIST distiller is started, the temperature of the solvent slowly starts to rise and consequently the vapor pressure of the solvent rises, which therefore increases its concentration in the gaseous phase above the free surface. Consequently, this gaseous phase increases in volume and begins to move into the first condenser COND1 fed with chilled water. When the concentration of vapors at the temperature of the chilled water is sufficiently high, i.e. higher than that of the dew point, part of the solvent begins to condense.

Continuing with the heating, all the volume above the free surface of the solvent in the DIST distiller and the section of piping that connects it to the first condenser COND1 is occupied by solvent vapours and all the air, which is non-condensable, is forced to pass through the condenser COND3 powered by the refrigerator and finally goes to inflate the POLM bag. The latter, increasing in volume, slightly increases the pressure in the interspace I of the rigid tank S5 in which it is confined. A pressure instrument detects this slight increase in pressure and activates the pump P1 which, through the pneumatic valve VP14, extracts the air from the interspace I, bringing the pressure back to the previously set value. When the DIST distiller reaches the steady state condition, the solvent vapours occupy all the space up to approximately half of the condenser COND1, the upper part of which is occupied by a sort of cold air plug that prevents the vapours from escaping. The air that has passed through the condenser COND3 at a low temperature where it has lost a significant part of the solvent vapors, remains inside the POLM bag without condensation of solvent inside it since the air has passed through a COND3 condenser at a temperature much lower than the temperature at which the POLM bag is located. Continuing the distillation the distillate produced is passed into a classic SEP water solvent separator where gravity separates the solvent from the water. Halogenated solvents, such as methylene chloride, used in metal washing in general are very poorly soluble in water and have a significantly higher density so they are easily separated from water by gravity. The distillate is then collected in said one or more accumulation tanks S1 and S2, also connected to the condenser COND1 via the upper part of the SEP separator and, via the condenser COND1, are connected to the condenser COND3.

It is generally preferred that the solvent used in the washing phases is at a temperature fairly close to the boiling point so that sometimes the solvent vapours produced by the DIST distiller are brought into contact with the accumulation tanks before being condensed in the condenser COND1. Therefore, the air present in these tanks is also replaced in whole or in part by the solvent vapours and following the usual path COND1 and COND3, it accumulates in the POLM bag.

The latter must therefore have a minimum volume greater than the entire volume of the air that is moved by the DIST distiller and the accumulation tanks when the machine is started, bringing it to working temperature.

For safety, the POLM bag should have a volume at least equal to that of all the tanks in which solvent may be contained. If this is contained even in minimal part and is at a very low temperature, it means that the quantity of air above the free surface is high and in the event of heating is expelled with its load of solvent vapors.

### 4.5. Description of a typical spray washing cycle

Once the preparatory phase with the DIST distiller and the CRIO refrigerator at has been completed, with the POLM bag within the pre-established volume limits and with temperatures that have reached the pre-established values and with solvent in said storage tanks S1 and S2 in sufficient quantity, a typical washing cycle can be started.

The material is therefore loaded into the CAM washing chamber and once the door is closed, the washing cycle can be started.

### 4.6. Air extraction phase from the washing chamber

Air is the main vehicle for solvent emissions in washing systems especially if low boiling point solvents such as methylene chloride are used. When air comes into contact with the solvent, whether in the liquid phase or in the vapour phase, a mixture of air and vapours is formed. If you want to recover solvent vapors from an air stream, the only physical means available are cold and absorption on some material that has chemical affinity with the solvent such as activated carbon. However, with a cold passage of the gaseous stream through a low temperature condenser, the recovery of the solvent is never total and depends strongly on the condensation temperature.

If possible, it is therefore better to reduce to a minimum the possibility that the air comes into contact with the solvent.

Therefore, before the solvent is introduced into the CAM washing chamber, it is advisable to extract all the air from the CAM washing chamber, especially if the solvent being worked with is very volatile.

The air that enters the CAM washing chamber during the loading operation of the material to be washed is ambient air and therefore air without the presence of solvent. Therefore, it can be extracted from the vacuum pump P4 via the valve VP1 until reaching an absolute pressure inside the CAM chamber very close to zero or in any case in the order of a few millibar.

This air is not contaminated by solvent and therefore can be released into the atmosphere.

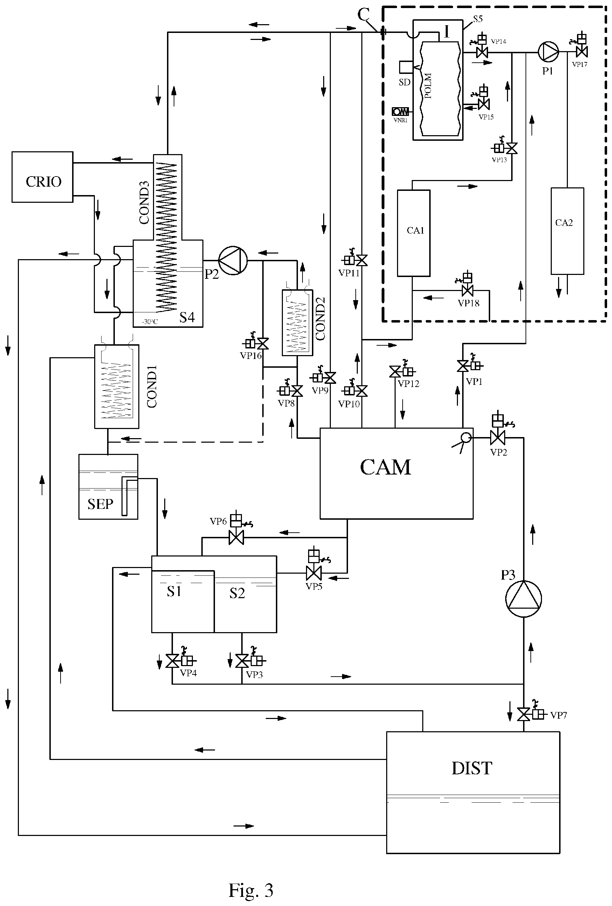

In the case in which the same pump that manages the POLM bag is used for the air extraction from the CAM washing chamber, the P4 pump can be omitted and the first P1 pump will release the air extracted from the CAM washing chamber into the atmosphere through the VP1 and VP17 valves as shown in fig. 3.

### 4.7. Solvent entry into the washing chamber and washing cycle

Once the air extraction is completed, the solvent is allowed to enter the CAM chamber via a P3 washing pump and the VP2, VP3 or VP4 valves, taking the solvent from the S1 or S2 storage tanks. Each user will enter the most suitable washing program for the type of material to be washed, which could be a spray wash with return of the solvent to one of the tanks from which S1 or S2 was taken, or an immersion wash with partial flooding of the CAM washing chamber, with or without ultrasounds and at the temperature considered appropriate. Whatever the washing program chosen, as soon as the solvent enters the CAM washing chamber where the vacuum has been created, there is immediate partial evaporation of the solvent itself and the absolute pressure increases. If the solvent that enters has a temperature equal to its boiling point, the CAM chamber reaches in a very short time a pressure very close to that set by the POLM bag. If, on the other hand, the solvent is far from its boiling point, the pressure inside the CAM washing chamber will settle at a value close to that of the vapor pressure of the solvent. Whatever the temperature and therefore the vapor pressure of the solvent entering the CAM chamber, the fact that part of the solvent is transferred into a CAM chamber in which a vacuum has been created, causes a sudden decrease in the pressure of all the tanks connected to it and, being connected to the POLM bag, causes a decrease in the pressure inside it. The POLM bag then deflates and part of the air contained in it is distributed in the various parts of the machine, thus avoiding taking air from the outside. This function of balancing the internal pressure of the washing machine without the supply of external air is extremely important for the purpose of reducing solvent emissions, especially if the latter is very volatile. If this POLM bag were not present, the air would enter the machine from the outside and then would be re-emitted with its load of solvent, more or less high depending on the capacity of the condensers and the columns of active carbons.

This is the reason why before the start of a washing cycle it may be convenient to set the volume of the POLM bag not to the minimum, precisely to allow it to shrink in the event that the removal of air from the CAM washing chamber creates a lowering of the pressure in all the tanks of the washing machine when the solvent enters the CAM chamber.

### 4.8. Final vacuum drying.

Whatever the washing cycle set, the process continues with the drying of the washed parts by creating a vacuum in the CAM washing chamber. The vacuum evaporates the solvent even at very low temperatures and represents the most effective solution for removing traces of solvent even from blind holes and complicated geometries. The vacuum can be created with various types of pumps with condensation of the solvent vapors before or after the pumps. Whatever the system for creating the vacuum, the air that enters the CAM chamber during the washing cycle or remains at the end of the initial air extraction phase is expelled from the machine and must therefore be treated with condensers or with absorption on absorbent media such as activated carbons. It is clear that the less air remains in the CAM washing chamber during the preliminary air extraction phase, the lower the solvent emissions and the lower the quantity of activated carbons to be used.

In the vacuum drying phase, all the vapours and any air that may have remained or entered the CAM washing chamber are expelled from the chamber itself, pass through the low temperature condenser COND3 and finally are introduced
into the POLM bag. Therefore, if air remained in the chamber or if air entered during washing when the CAM chamber was under vacuum or in strong depression, this air is added to that already present inside the POLM bag which increases in volume. Once a certain volume is reached, the POLM bag must be reduced in size by extracting air from inside it via the first pump P1 through the valve VP11 and then through the said active carbon cartridge CA1 followed by the valve
VP13 and by the said carbon cartridge CA2. Whatever the solvent, a small quantity of vapors must be absorbed by the active carbons which sooner or later run out. Therefore, the entry of air into the machine must be avoided as much as possible.

### 4.9. Deodorization of the washing chamber (replacement or dilution of the gaseous phase inside the washing chamber with cleaner air)

The application of vacuum in the CAM washing chamber evaporates the solvent completely, but it is not guaranteed that a concentration of vapors inside the CAM chamber equal to, for example, one gram per cubic meter is reached, which is a limit required by various international regulations at least for certain chlorinated solvents. Even if a very low absolute pressure is reached at the end of drying, for example 1 millibar, the solvent concentration remains higher than 1 gram /cubic meter as can be easily calculated with the ideal gas equation which, for very low absolute pressures, can be considered valid for any type of solvent. With a solvent concentration greater than 1 gram per cubic meter, even if atmospheric pressure is restored by introducing air into the CAM washing chamber, the solvent concentration always remains greater than 1 gram per cubic meter, because adding air to reach atmospheric pressure does not change the concentration of the residual solvent vapors as can be seen from the laws of physical chemistry applied to mixtures of gases and vapors. The usual practice to lower this concentration consists in replacing the air inside the CAM washing chamber with cleaner air having a solvent concentration of less than 1 gram per cubic meter.

Instead of using external air for this operation, air from the outlet of the COND3 condenser is introduced into the CAM washing chamber, air which is then extracted from the washing chamber by the vacuum pump system P2 and returned to the COND3 condenser where it loses some of the solvent vapors it had removed from the CAM washing chamber.

For example, if the air inside the condenser outlet COND3 has a concentration at atmospheric pressure of 140 grams per cubic meter, expanding for example 200 times, when it enters the CAM washing chamber kept at 5 millibar absolute, the concentration of the vapors drops to the value of 140/200 = 0.70 grams per cubic meter. By letting air enter at this concentration and recirculating it in the condenser COND3, inside the CAM washing chamber the concentration of the solvent drops tending asymptotically to a value slightly higher than 0.70 grams per cubic meter. Deodorization can also be performed by introducing a small amount of air from the COND3 condenser at one time and then creating a vacuum until reaching, for example, 5 millibar absolute.

Once this final drying pressure is reached, if the amount of air taken from the COND3 condenser is sufficient, a solvent concentration is reached in the CAM washing chamber that is low enough to restore atmospheric pressure and discharge the material.

During the entire washing and deodorization process, the machine was always kept at the pressure set by the POLM bag, preferably at negative pressure compared to the atmosphere, at least for low boiling point solvents such as methylene chloride. However, a very small amount of air has entered the machine and is the one that remained in the CAM washing chamber at the end of the air extraction phase. In the initial air extraction phase, it is possible to easily achieve in a short time a final pressure of a few millibar without the need for high-performance pumps. For example, if you reach 5 millibar absolute in a 1000-litre CAM chamber, you can easily calculate with the gas laws that 1000 litres at 5 millibar correspond to 5 normal litres of air (i.e. 5 litres of air at atmospheric pressure). Therefore, an incomplete air extraction can leave a small amount of air in the CAM chamber that is subsequently extracted from the CAM washing chamber during the final drying and not condensing, since the air is non-condensable, it increases the volume of the POLM bag by 5 litres.

Each washing cycle therefore increases the volume of the POLM bag and therefore sooner or later the time comes to reduce its volume.

### 4.10. Restoring atmospheric pressure in the washing chamber.

Once deodorization has been carried out as described in the previous paragraph until reaching a solvent concentration of less than 1 gram per cubic meter, the atmospheric pressure in the CAM washing chamber is restored by opening the vacuum break valve VP12, in order to open the door and extract the washed material.

### 4.11. Zeroing emissions with the use of activated carbons.

If you wish to carry out a washing cycle with zero emissions, before restoring atmospheric pressure in the CAM washing chamber, it may be convenient to carry out a further deodorization with external air, air therefore with zero solvent concentration, in the same way as the deodorization described in paragraph 4.9, but obviously in this case with pure air. For simplicity of calculation, we consider a 1000-liter CAM washing chamber in which at the end of drying an absolute pressure of 5 millibar can be reached. Using the gas laws, it is easy to calculate that one liter of air at atmospheric pressure when expands to 5 millibar and occupies a volume of 1000/5 = 200 liters. Therefore, if even just a few liters of pure air are introduced from the outside through valve VP12, they expand in such a way as to generate a very high volume which lowers the concentration of solvent remaining in the CAM washing chamber in an asymptotic manner. However, this air entering the washing machine is not condensable and would increase the volume of the POLM bag, so instead of letting it enter it, it is extracted from the CAM chamber via pump P1 which sucks it in through valve VP10, from which it passes through the active carbon cartridge CA1 and from there through valve VP13 it passes through the active carbon cartridge CA2. With the formula that describes the concentration trend in a chamber in which a small quantity of clean air is introduced, it is possible to calculate how long it takes for the concentration to reach a desired value, for example 50 parts per million (ppm). Once this value is reached, the atmospheric pressure is restored as in paragraph 4.10.

The quantity of air needed in this final deodorization phase under high vacuum is very low and therefore the duration of the activated carbons is high as can be verified in a future paragraph.

### 4.12. Stopping the machine at the end of the work session.

If the washing machine is not to be used continuously 24 hours a day, the machine should preferably be stopped by leaving only the CRIO low-temperature chiller running, which supplies the COND3 condenser and the POLM bag pressure control system. Stopping the machine causes the DIST distiller and the tanks containing the solvent to cool. This results in a reduction in the vapor pressure of the solvent and therefore a reduction in the volume occupied by its vapors, as well as, of course, a reduction in the volume of the air.

Therefore all the air that was expelled from the DIST distiller and the tanks in the heating phase, returns from the POLM bag whose volume is reduced.

**The POLM bag by accumulating air in the heating phase of the machine and returning it in the cooling phase reduces to zero the need to treat the air in the heating phase or with cold or with active carbons or with the two systems simultaneously, even if the on and subsequent off cycle is performed for a very high number of times.**

### 5. Calculation of solvent emissions of a single-chamber vacuum-based washing machine equipped with a bag as described previously.

As can be easily understood, volatile solvents are the most difficult to handle in order to reduce emissions into the atmosphere since the use of cold to condense the vapors is more demanding than with solvents with a high boiling point.

As a consequence, with volatile solvents it is necessary to minimize the quantity of air in contact with the solvent because separating and recovering vapors from the air is always an expensive and sometimes very difficult operation.

To give a concrete example of the emissions of a single-chamber vacuum-based solvent machine, the solvents considered are methylene chloride, trichloroethylene even if it is no longer used and tetrachloroethylene also called perchloroethylene. For these solvents, the calculation of the emissions is carried out using, in addition to the parameters of the washing machine (volume of the machine, degree of vacuum that can be achieved in each phase), the equations that describe the behavior of the gases, the vapor pressure as a function of the temperature calculated according the Antoine equation and the exponential equations that describe the trend of the concentration of a solvent contained in a container when it is desired to reduce this concentration by introducing pure air or air with a low concentration of solvent. These equations are available and easily understandable for those who have a minimal knowledge of the behavior of gases and know how to perform mass balances. Small variations in vapor pressure values can be found in the various data tables available in the literature.

### 5.1 Calculation of methylene chloride emissions

A washing cycle such as the one described in the previous paragraphs is considered, characterized by initial air extraction, spray or immersion washing with or without ultrasounds, in two or more stages, vacuum drying,
deodorization also under vacuum before restoring atmospheric pressure in the CAM washing chamber.

The following table shows the most important parameters.

| | |
|---|---|
| chamber volume: (liters) | 100 0 |
| final pressure at the end of air extraction from the chamber: (millibar) | 5 |
| quantity of air remaining at the end of air extraction from the chamber: (normal liters) (1000 x5/1000) | 5 |
| final pressure at the end of drying: (millibar) | 5 |
| air temperature at the outlet of the condenser COND3 (°C) | -30 |
| density of methylene chloride vapors at 40°C and ambient pressure (g/m3) | 330 0 |
| density of solvent vapors at the end of drying pressure (5 millibar) without any deodorization (g/m3) (3300 x 5/1000) | 16.5 |
| A vacuum-based drying with a final pressure of 5 millibar as you can see is far from reaching 1 gram per cubic meter. Even if we reach 1 millibar, that is, 5 times less, the concentration would be equal to about 3.3 g/m3, (3300/1000), so always above 1 g/m3. It is therefore necessary to carry out a deodorization, that is, a dilution, without bringing air from outside, but using the air stored in the POLM bag having a concentration of about 140 grams/m3 as it has passed before being introduced into the POLM bag in a condenser at a temperature not exceeding - 30°C, or by using the air at the outlet of the condenser COND3. | 3.3 |
| Keeping the chamber at 5 millibar, a small amount of air is introduced, taken downstream of the condenser COND3 via the valve VP9, air which then expands by about 200 times (1000 /5) thus reducing its solvent concentration by 200 times and therefore equal to 140/200 = 0.70 grams per cubic meter. This air enters the chamber and the vacuum pump or group of pumps P2 brings it back to the condenser COND3 and therefore there is no entry of air from the outside. Using the mass balance equations that describe this form of dilution, it is easy to calculate that he concentration in the washing chamber tends asymptotically to reach the value of 0.70 grams / m3. When it is assumed based on calculations or on a instrument concentration meter that this is less than 1 /m3, the deodorization can be stopped and the atmospheric pressure in the washing chamber can be restored by opening the VP12 valve. It is therefore considered that with this type of deodorization in the chamber at the end there is a concentration equal to 1 g/m3. | 1.0 |
| This washing cycle has brought 5 litres of air into the POLM bag, which is the air that remained in the chamber at the end of the air extraction. Washing after washing, this air increases the volume of the POLM bag and therefore every so often it is necessary to provide for the reduction of its volume. | 0.70 |
| This phase of reduction of the volume of the POLM bag must expel 5 litres of air from the washing machine for each cycle or at the end of each cycle or when the increase in volume of the POLM bag air exceeds a certain value. The air that had entered the POLM bag, after having passed through the condenser COND3, has a concentration of 140 grams /m3, which means an emission of 140 x 5 /1000 = 0.70 grams for each washing cycle. | |
| The physiological solvent emission, meaning by physiological that which is due to the laws of physical chemistry based on parameters such as vacuum level, temperature of the condensers and flow rates, is therefore equal to: | 1.70 |
| 1 gram /m3 which is what is present in the chamber when the door is opened and 0.70 grams due to the air that sooner or later must be extracted from the POLM bag of the washing machine as it is not completely removed during the air extraction phase. | |
| In total, the physiological emission of a washing machine based on vacuum with methylene chloride, having a washing chamber of 1000 liters is equal to 1 + 0.70 = 1.70 grams. | |

If you want to completely eliminate the emissions, you need to carry out a final deodorization as described in paragraph 4.11. In this case, for each wash cycle, a small fraction of the activated carbon contained in the CA1 and CA2
cartridges is saturated. Assuming an activated carbon retention capacity of 20%, a very plausible value for halogenated solvents used in industrial washing, for each washing cycle, 1.70/0.20 = 8.5 grams of activated carbon are saturated.

A washing machine with a fairly large CAM washing chamber (1000 litres) would therefore need 8.5 kg of activated
carbon for 1000 washing cycles. For such a small quantity, it is not necessary to install large activated carbon systems with automatic regeneration, but it is better to use disposable activated carbon cartridges.

### 5.2 Calculation of methylene chloride emissions due to heating of the machine if there were no POLM bag.

The emissions due to the heating phase of the DIST distiller, as seen previously, are zero, but to highlight the importance of the device that is the object of this invention, it is possible to easily calculate what the emission of solvent into the atmosphere would be in the absence of this device.

Considering the previous example of a machine with a CAM washing chamber of 1000 liters, it is possible, staying on the safe side, to estimate that for a machine of such dimensions, the gaseous phase above the free surface of the DIST distiller and the various tanks containing 1000 liters of solvent. The machine can work even when the DIST distiller is not at maximum level and therefore in the worst conditions, the gaseous phase above the free surface of the solvent is certainly high.

The air contained in this gaseous phase at a temperature of 20°C contains solvent vapors in quantities that depend on the vapor pressure of the solvent itself and that is, on its volatility.

Considering methylene chloride, which at 20°C has a partial pressure of 0.46 bar, this means that in a cubic meter of gaseous phase comprising air and methylene chloride vapors there are ideally 460 liters of solvent vapors and 540 liters of air obviously mixed perfectly together. During the machine heating phase, this entire gaseous phase passes through the low temperature condenser COND3 where a significant part of the solvent is condensed. The air that exits the COND3 condenser and enters the POLM bag has a concentration at - 30°C of approximately 140 grams of solvent. If the POLM bag did not exist, this air would be emitted into the atmosphere as it is, or would be treated with activated carbon. A volume of 540 liters of air would emit approximately 75.6 (540 x 0.140) grams of solvent, or it would be necessary to treat it with activated carbon. In the absence of this device, each on-off cycle of the machine involves an emission of over 75 grams of solvent, which, if one wants to eliminate, involves the use of very large activated carbon cartridges. If during the air extraction and final vacuum drying phase we reached 2 mbar, the physiological emissions would be further reduced while those of heating / cooling would remain the same. It is much easier to increase the vacuum level since most vacuum pumps easily reach 0.5 mbar absolute, while it is more difficult and expensive to lower the solvent condensation temperature.

### 5.3. Calculation of emissions for trichloroethylene (also known as trichloroethylene)

The calculations, above, for methylene chloride can be redone using the same laws and equations indicated above also for trichloroethylene which is almost no longer used in several countries, as the emission limits are very stringent.

It is worth reporting the calculation of these emissions, however, considering trichloroethylene a solvent with intermediate volatility between the most volatile ones and perchloroethylene.

The calculations are performed with the washing machine described previously therefore with the same cold production capacity and that is with a refrigerator capable of cooling the air exiting the COND3 condenser to - 30°C.

Furthermore, due to its toxicity, it is allowed to open the door of the CAM washing chamber when the concentration of trichloroethylene is only 0.1 grams/m3 and not 1 gram/m3. In this case, the physiological emissions for each washing cycle would be slightly higher than 0.15 grams and obviously those of the heating phase of the machine would be zero.

It should not be surprising that these emissions are lower than those of methylene chloride. This can be explained by the fact that the concentration of trichlorethylene at the outlet of the COND3 condenser is much lower than that of methylene chloride, trichlorethylene being less volatile (about 15 grams/m3 versus 140 grams/m3).

Deodorization with air having a very low concentration of solvent is obviously more efficient. It should be added that the concentration inside the CAM washing chamber must be lowered to 0.1 grams/m3 instead of 1 g/m3.

### 5.4 Calculation of emissions for perchloroethylene

The same calculations can be done for perchloroethylene, but it must be kept in mind that it freezes at - 21°C, so in order to reduce defrosting problems it is advisable to use a refrigerator that has a temperature of - 20°C at the outlet of the condenser COND 3.

The main parameters for a washing chamber of one cubic meter are reported below, similarly to what is indicated for methylene chloride.

| | |
|---|---|
| chamber volume: (liters) | 100 0 |
| final pressure at the end of extraction air extraction from the chamber: (mILLIbar) | 5 |
| quantity of air remaining at the end of air extraction from the chamber: (normal liters) (1000 x 5/1000 | 5 |
| final pressure at the end of drying: (mbar) | 5 |
| temperature of the air at the outlet of the condenser COND2: (°C) | -20 |
| concentration of perchloroethylene in saturated air at - 20°C: (grams/m3) | 10 |
| With a very high vapor density greater than 4000g/m3, even ending drying at 5 millibar the concentration would be many times higher than 1 g/m3. It is therefore necessary to reduce this concentration by diluting the gas mixture inside the chamber with air containing a lower concentration of solvent such as that which comes out of the condenser COND3. | |
| By keeping the chamber at 5 millibar, a small amount of air taken downstream of the COND3 condenser is introduced, air that then expands 200 times (1000 / 5) thus reducing the solvent concentration by 200 times. | |
| If we start from air that contains only 10 grams / m3 of perchloroethylene vapors expanding 200 times if the pressure in the chamber is kept around 5 millibar, its concentration is reduced to 10/200 = 0.05 grams/m3. But taking into account that the temperature of the chamber is almost always many tens of degrees above zero, due | |
| to the expansion due to the temperature, the concentration after the expansion of 200 times is actually less than 0.05 g/m3. This result is extremely interesting, as it indicates that it is possible to carry out a deodorization even with air at 10°C which, if saturated with perchloroethylene vapors, contains about 74 grams of solvent as can be calculated with the Antoine equation. | |
| By making this air expand 200 times as it reaches a pressure of 5 millibar absolute, the concentration in the chamber tends asymptotically to approach 0.37 g/m3 (74/200), sufficient to deodorize the chamber, i.e. lower the solvent content. When it is assumed based on calculations or on a instrument concentration meter that the latter is less than 1 gram /m3, the vacuum drying can be terminated and the atmospheric pressure in the washing chamber can be restored. | |
| This washing cycle has allowed 5 liters of air to enter the POLM bag, which is the air remaining in the chamber at the end of the air extraction. | |
| Washing after washing, this air increases the volume of the POLM bag and therefore it is necessary to provide for the reduction of its volume. This phase expels 5 liters of air from the washing machine for each cycle, air that if it comes out at a temperature of 10°C therefore at 74 grams/m3 means an emission of 5 x 74/1000 = 0.37 grams. For perchloroethylene, therefore, a low-temperature refrigerator is not necessary, but a normal water refrigerator is sufficient to reduce emissions to almost zero by treating the small quantity of vapors with activated carbon contained in a disposable cartridge. | |
| The physiological emission of perchloroethylene is therefore equal to: 1 gram /m3 for what is present in the chamber when the door is opened and 0.37 grams due to the air that sooner or later must be extracted from the machine as it is not completely removed during the air extraction phase. | 1.37 |
| In total, the physiological emission of a vacuum-based washing machine with perchloroethylene having a washing chamber of 1000 liters is equal to 1 + 0.37 = 1.37 grams, obtainable without using low-temperature refrigerators, but simply refrigerators for water having a temperature around zero degrees centigrade. | |

As in the previous cases, the solvent emission during the heating phase of the machine can be calculated if it were not equipped with a POLM bag. A gaseous phase of 1000 liters above the free surface of the solvent in the various tanks at a temperature of 20°C would be composed largely of air since perchloroethylene is not very volatile. Using the gas laws or tables available in the literature, it can be estimated that a cubic meter of gaseous phase above the free surface of the perchloroethylene contained in the tanks of the washing machine at 20°C is composed approximately of 981 liters of air and 19 liters of solvent vapors obviously mixed uniformly together. Treating this air at 10°C with a condenser with water close to zero and with an outlet temperature of 10°C, this air would have a concentration of approximately 74 grams of perchloroethylene.

If there were no element to hold this air and release it during the cooling phase, 74 x 0.981 = 73 grams of solvent would be lost for each start of the distiller.

### 6. Random solvent emissions

The above calculations can establish the physiological emissions, i.e. the ideal ones in the case that the conditions of the washing process are respected. In daily practice, very high random emissions can occur due to a lack of vacuum sealing of one or more parts of the washing machine. In order to avoid this an important precaution is to keep the entire machine under negative pressure, so that in the event of a sealing defect, air enters the machine, avoiding a solvent leak. In this case, the POLM bag, the object of this invention, increases its volume every time a small amount air enters the machine and since the volume of the POLM bag into which the air enters has a volume that is constantly measurable with the instruments indicated previously, it constitutes a very valid and indispensable instrument for controlling random losses which, without this device and without maintaining under negative pressure of the entire machine, can be many times higher than the physiological emissions.

### 7. Further application of depression to completely reduce to zero the physiological and random emissions of the machine.

The POLM bag described as in figure 1 allows to reduce to a minimum the physiological emissions of the solvent, to monitor the integrity of the machine 24 hours a day by keeping it in negative pressure, but can make it extremely safe if it is built with the criteria of clean rooms. These are workplaces in which the internal pressure is maintained at a value slightly higher than the atmospheric one if the product must be protected from possible external contamination.

Taking inspiration from the construction of clean rooms or for the confinement of contaminating productions, one can consider creating a washing machine with a watertight or relatively watertight casing with an internal pressure slightly lower than the ambient one.

A depression of just 1 millibar with respect to the environment in which the machine is installed is more than sufficient to isolate it from the environment simply by taking care to make the casing with gaskets that ensure its sealing towards the outside which, being at a pressure of just 1 centimeter of water column higher than the internal one, does not require complicated and expensive technical solutions.

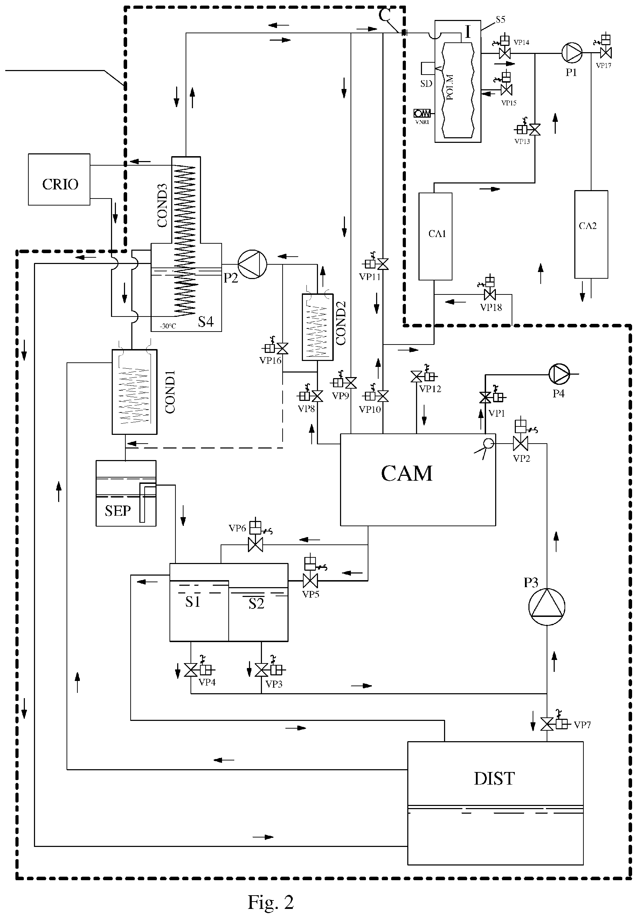

Fig. 2 shows the hydraulic and instrumental diagram (PID) of the machine in which all the components that contain solvent in liquid or gas phase are inserted within the area delimited by the dotted line. The chamber door must obviously be accessible from outside this area.

A differential pressure sensor for clean rooms activates the pump P1 which extracts air from the confined area to keep it below the desired pressure, passing this air through the activated carbon cartridges CA1 and CA2 via the valves VP18 and VP13. The amount of air to be removed to lower the internal pressure of the confined area by 1 millibar is very low. Assuming a washing machine with a volume of the confined area of 10 m3, therefore quite large, it is sufficient to transfer to the outside just 10 liters to keep it at a depression of 1 millibar.

The P1 pump and the activated carbon cartridges CA1 and CA2 are therefore also used to manage any emissions of air with traces of solvent that may have accidentally leaked from some component of the washing machine.

The volume of air transferred to the outside by the P1 pump through the activated carbon cartridges CA1 and CA2 constitutes a valuable tool for controlling incidental solvent emissions into the external environment.

### 8. Further application of the confinement of the washing machine for weakly flammable solvents.

Modified alcohols and high boiling point hydrocarbons used in industrial washing are weakly flammable and the introduction of some precautions makes the use of these solvents safe even in the presence of electrical components such as valves, sensors and non-ATEX electric motors. However, in cases where absolute safety is required, where the machine is made with confinement towards the outside, as described previously, a further guarantee to avoid flammable conditions is constituted by the inertization of this confined area with nitrogen. In this case it is preferable to maintain a positive pressure with respect to the external environment in order to avoid air intake. However, a sensor that measures the oxygen or nitrogen concentration inside the confined area even under negative pressure is sufficient to check that the conditions are met to avoid flammable conditions inside the washing machine. Inertization must be carried out with caution, taking care that the nitrogen can flow also inside the tanks containing the solvent and must be continuously monitored with sensors placed in the most appropriate points. Very pure nitrogen is not necessary, but technical nitrogen as it is sufficient to create an atmosphere inside the confined area in which any casual leaks of solvent always maintain a concentration below the lower explosive limit. Inertization with nitrogen prevents a possible explosion inside the pumping groups of vacuum pumps which are actually compressors. If, due to some leak, the vacuum pump during the drying phase, when the solvent vapours are removed from the CAM washing chamber, it sucks in air, that is compressed in the compression chamber and could generate a potentially explosive atmosphere. If it sucks nitrogen instead of air, the risk of explosion inside the pump is reduced to zero.

### 9 . Summary of the advantages that can be obtained in a single-chamber solvent washing machine with vacuum drying with the device that is the subject of the patent.

The device that is the subject of the present invention applicable in single-chamber solvent washing machines with vacuum drying therefore allows:
- completely eliminating solvent emissions into the atmosphere due to the preparation phase of the machine, i.e. the heating phase to distill and regenerate the solvent;
- maintaining under vacuum all the components in which the solvent is present in the liquid or gaseous phase so that any lack of vacuum sealing causes the entry of air into the machine and prevents the escape of solvent. This function for volatile solvents is the most important for the purpose of reducing emissions;
- confining all the components of the machine containing solvent in the liquid or gaseous phase in a space at a pressure slightly lower than ambient pressure, in order to confine any accidental leaks inside the machine casing,
- nitrogen inertization of the confined area for solvents that present explosive hazards.

### 10. Application of a vapour and air collection bag applied to steam degreasers.

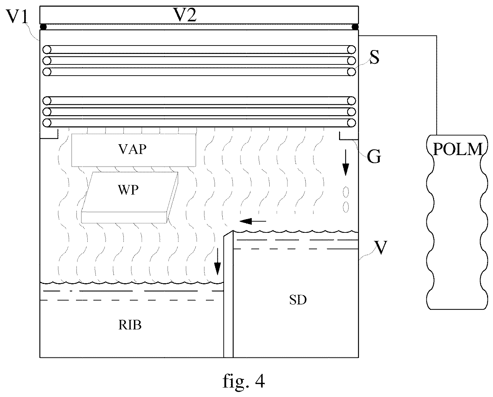

A schematic drawing of this type of machine is shown in fig. 4.

This type of solvent washing machines are very simple as they are basically made up of a tank V divided in the lower area into two or more compartments SD, and RIB, open towards the top from where the pieces to be washed are made to enter and exit WP. Below the upper edge V1 of the tank V adjacent to the walls is inserted at least one coil S in which a fluid coming from a refrigeration circuit at a very low temperature, usually at about - 30°C flows, cooling the entire layer of air and vapors placed in front of it.

The lower part of the tank contains the solvent which in at least one compartment RIB is brought to the boiling point. The vapors produced rise upwards and are condensed by the coil S placed below the upper edge V1. The condensed solvent is collected in a gutter G below the coil S and reintroduced by gravity either into the section dedicated to evaporation or in one or more adjacent sections from which it cascades back into the distiller SD.

There are many variants but basically what characterizes them is the fact that the pieces to be washed WP are made to enter from the top, they descend into the VAP vapor area until they are sometimes immersed in one or more tanks, they rise, they stop possibly in a hot area where the heat is generated by coils or heating resistances adjacent to the walls to heat them above the boiling point of the solvent used, they rise to stop in front of the coils at very low temperature that condense the vapours and dry the washed pieces which are then slowly extracted through the cold air plug near the edge of the tank. If the introduction and extraction of the pieces to be washed are carried out slowly without creating turbulence and if the cold plug under the edge is very thick, the solvent loss is very low. When they are not working, they are generally equipped with a V2 door, even if it is not vacuum-tight, which closes the opening.

Due to their simplicity, they have numerous applications. They use chlorinated solvents or mixtures of chlorinated solvents with other fluorinated solvents, isopropyl alcohol and generally solvents with a low boiling point. These machines work at atmospheric pressure and often above the tank they are equipped with a cabin where the equipment for introducing and extracting the baskets of material to be washed is inserted. These machines are generally called vapor degreasers.

### Solvent emissions

Since these machines cannot be vacuum-tight, they inevitably emit a small amount of solvent into the atmosphere, which depends on various factors, but which cannot be eliminated except with absorption systems.

Emissions into the atmosphere occur in all phases in which the machine is located, both during their use and during the period of inactivity. These emissions are calculated below.

### Emissions during the inactivity period.

When the machine is paused, after a certain time the entire machine and the solvent contained therein are at room temperature. Even if equipped with closure systems that close the upper edge, they are still non-hermetic machines and therefore not vacuum-tight, so any variation even minimal in temperature between day and night inevitably causes a variation in the pressure of the gaseous phase above the free surface. This gaseous phase is made up of air and vapor produced by the liquid with which it is in contact with a concentration of the solvent in the vapor phase that depends only on the temperature. Air like any gas varies its density according to the temperature and has a thermal expansion coefficient of 1/273 which means that a volume of 273 liters expands by one liter if the temperature increases by one degree centigrade. A machine with a gaseous phase volume of only 273 liters below the upper edge is considered quite small, so as an example we consider a volume of this area of 1000 liters. This gaseous phase is composed of air and solvent vapors. Let's consider for example methylene chloride as a solvent which at 20°C, being volatile, has a very high vapor pressure. As reported previously, a cubic meter of air above a tank containing methylene chloride at 20°C contains about 460 liters of solvent in vapor phase and 540 liters of air obviously perfectly mixed together.

The density of this gas mixture calculated with the ideal gas laws is well over 1 gram per liter.

Therefore, if during the period of inactivity, for example during the day, the temperature inside the machine rises by just one degree centigrade, 1000 x 1/273 = 3.66 liters of gaseous mixture come out of the machine, carrying with them at least 4 grams of solvent that is irremediably lost.

When the machine cools down, the external air re-enters the machine, re-establishes its concentration equilibrium with the solvent and is ready to emit a little more solvent at the next heating phase.

Each small variation in temperature machines left in pause for a long period of time causes to gradually lose all their solvent content.

A POLM bag consisting of a bag as described above connected to the degreaser, offering no resistance to any expansion due to heating, absorbs this increase in volume which it returns to the machine in the cooling phase. It therefore constitutes a sort of guardian that reduces or cancels the inevitable solvent emissions during the pause period due to the daily variation of temperature.

### Emissions during the heating phase

When the section of the machine is brought to boiling temperature to regenerate the solvent by distillation, the entire gaseous phase moves upwards where the coils S at - 30°C condense the solvent vapours. The air that exits from the
upper edge V1 and enters the upper cabin, if it exists, carries with it the vapours at a concentration that depends only on the temperature of the cooling coils. The gaseous phase gives up a good part of the vapours to the coils, but not completely as can be seen from physical chemistry. A concentration of solvent vapours is therefore reached that depends exclusively on the temperature of the coils. If the gaseous phase remains in sufficient contact with the coils, the solvent concentration reaches a value that is easily calculable with the laws of chemical physics, which in the case of methylene chloride and with a coil temperature of - 30°C is approximately 140 grams per cubic meter. Therefore, during the heating phase, if a cubic meter of air and vapor mixture comes out of the machine, 140 grams of methylene chloride will irremediably come out. For other solvents, the quantity is different and depends only on their volatility and their density in the vapor phase. If, however, as shown in figure 4, the machine is equipped with a POLM expansion bag and a minimum seal against overpressure, this air with the relative solvent vapors remains confined inside and returned during the cooling phase.

### Emissions during the working phase

During working session, assuming that the introduction and exit of the material through the cold air cap created under the upper edge of the machine occur ideally with zero turbulence, the degreaser does not emit solvent. This is not 100% true, but in any case the bag can't help.

## Claims

1. Industrial solvent washing machine, comprising a hydraulic circuit in which solvents are present in the liquid and/or gaseous phase, said circuit in turn comprising: at least one washing chamber (CAM) or a washing zone, one or more tanks containing solvent of which at least one is able to vaporize it, means for the condensation of solvent vapours, **characterised by** the fact of comprising at least one variable volume bag (POLM) made with flexible walls capable of expanding or reducing in volume also following any pressure variation, and means for hydraulic connection of said (POLM) bag to said hydraulic circuit so that any variation in pressure or volume of the gaseous phase, consisting of a mixture of air and solvent vapours, inside said hydraulic circuit, is transmitted to said (POLM) bag which expands or contracts freely so as to accumulate part of said mixture or clean air inside it during the heating and expansion phase and to return it in the cooling phase or in the presence of any temperature variation, both during operation and during the period of inactivity of the machine.

2. Industrial solvent cleaning machine as per claim 1, **characterized by** the fact that it comprises:
• at least one chimney (C) hydraulically connected to said hydraulic circuit containing solvent in liquid phase and/or in vapor phase, for the release from the machine of a mixture of air and solvent vapors,
• at least one rigid vacuum-tight tank (S5) inside which is inserted said at least one variable volume (POLM) bag, where said (POLM) bag is able to expand or contract without offering mechanical resistance inside said rigid tank (S5) so as to transmit its internal pressure to the gap (I) identified between said (POLM) bag and the rigid tank (S5), and where said chimney (C) is connected to said (POLM) bag or to said interspace (I), so as to confine said mixture of air and solvent vapours in a variable volume and in such a way that any variation in the pressure of the gaseous phase inside said washing machine is transmitted to said (POLM) bag and from there to said interspace (I) or vice versa;
• at least one vacuum pump (P1) or a compressor connected to said (POLM) bag and/or to said interspace (I), capable of controlling the pressure inside the said (POLM) bag itself and of said interspace (I);
• absorption means suitable for filtering said mixture of air and solvent vapours extracted from said (POLM) bag or from said cavity (I), retaining the solvents, before discharging them outside the washing machine, and where said machine is configured so that,
• in a heating phase of the machine, where the solvents vaporize, the mixture of air and vapours inside the machine increases in volume and enters partly into said variable volume (POLM) bag of said rigid tank (S5), expanding it;
• in a cooling phase, where the solvent vapours condense at least partly, the mixture of air and vapours contained in said variable volume (POLM) bag of said rigid tank (S5) reduces its volume and returns to said hydraulic circuit and/or to said condensation means, such that said mixture of air and solvent vapours is not emitted outside the machine.

3. Washing machine according to claim 2, **characterized in that** said chimney (C) is connected to said (POLM) bag, intended to contain at least part of said mixture.

4. Washing machine according to claim 2, **characterized in that** said chimney (C) is connected to said cavity (I), intended to contain at least part of said mixture.

5. Washing machine according to previous claims, **characterized in that** said (POLM) bag is a kind of expandable air chamber with flexible walls.

6. Washing machine according to claim 2, **characterized in that** said absorption means comprise activated carbon filters (CA1, CA2).

7. Washing machine according to claim 3, **characterized in that** said vacuum pump (P1) or compressor is connected to said cavity (I) by means of a first valve (VP14) to extract air from inside said cavity (I) and lower the pressure inside said (POLM) bag by reducing its volume.

8. Washing machine according to claim 3, **characterized in that** said vacuum pump (P1) or compressor is connected to said (POLM) bag by means of a second valve (VP11) which extracts the mixture of air and solvent vapours and introduces it into said absorption means.

9. Washing machine according to claim 2, **characterized in that** said pump (P1) or compressor is also connected to said washing chamber (CAM) for the extraction of air from the washing chamber (CAM) before introducing solvent.

10. Washing machine according to the preceding claims, **characterized in that** said (POLM) bag consists of a vacuum bag of the type used for the production of carbon fiber products and other highly resistant fibers impregnated with resins, consisting of a multilayer film resistant to all halogenated solvents.

11. Washing machine according to the preceding claims, **characterized in that** it comprises a containment fairing formed by walls that contain at least part of said hydraulic circuit, and where the inside of said fairing is hydraulically connected to said pump (P1) or compressor by means of at least one valve (VP18) and at least one duct, through which the air extracted from said fairing is discharged to the outside passing through said absorption means, where the solvents are removed.

12. Washing machine as per claim 1, **characterized in that** it is a vapour degreaser, comprising a tank (V) open upwards
in the edge of which at least one cooling coil (A) is inserted and where said (POLM) bag is hydraulically connected to the inside of said tank (V), at a point preferably above said cooling coil (S).

13. Method of using the washing machine as per claims 1 to 11, for checking the vacuum seal of the machine, **characterized in that** it comprises the following phases:
• Maintaining the pressure inside said variable volume of said rigid tank (S5) at values lower than atmospheric pressure;
• Detecting the volume variations of said variable volume of said rigid tank (S5);
• Alarm signaling in the event of abnormal volume variations, due to unforeseen air inflows from outside.

14. Method of using the washing machine as per claims 3 to 11, to increase the boiling temperature of the solvents, **characterized by** the fact of increasing the pressure inside said hydraulic circuit in which the solvent is contained by increasing the pressure inside said interspace (I) to values greater than atmospheric pressure, such that said pressure is transmitted to said (POLM) bag and therefore inside said washing machine.

15. Method of using the washing machine as per claim 11, to avoid unwanted solvent leaks in the work environment **characterized by** maintaining a pressure lower than atmospheric pressure inside said casing of the machine, making it similar to a clean room, by means of said pump (P1) or compressor, so that the air containing any traces of solvent vapors can be transferred to the outside only through said absorption means by means of said valve (VP18).
